# EUROPEAN PATENT SPECIFICATION

(11) **EP 2 572 864 B1**
(45) Date of publication and mention of the grant of the patent: **01.07.2015**
(21) Application number: 12183102.8
(22) Date of filing: 05.09.2012
(51) Int. Cl.: B29C 67/00

(54) **Three-dimensional shaping apparatus**
Dreidimensionale Formungsvorrichtung
Appareil de mise en forme tridimensionnel

(30) Priority: 22.09.2011 JP 2011208221
(43) Date of publication of application: 27.03.2013
(73) Proprietor: Keyence Corporation, Osaka-shi, Osaka 533-8555 (JP)
(72) Inventor: Saito, Kazuki, Osaka, 533-8555 (JP)
(74) Representative: Hoffmann Eitle

(56) References cited:
- WO-A1-2009/125381
- US-A1- 2005 104 241
- US-B1- 6 357 855

## Description

### BACKGROUND OF THE INVENTION

### 1. Field of the Invention

The present invention relates to a three-dimensional shaping apparatus for fabricating a stereoscopic shaped object in an ink-jet manner.

### 2. Description of Related Art

There are known apparatuses that sets three-dimensional data, that is basic data for a shaped object, to an arbitrary attitude on a computer screen, creates data for each respective cross section sectioned in a plurality of parallel planes with respect to the height based on the set attitude, forming a stereoscopic shaped object with successive lamination of resin based on the two-dimensional data related to each layer, and thereby create a shaped body acting as a three-dimensional model of the shaped body.

In the field of rapid prototyping (RP), which is used in prototyping in product development and the like, there are employed laminate shaping methods which enable three-dimensional shaping. Such laminate shaping methods are adapted to slice a three-dimensional CAD data of a product, create overlapped thin plates as original product data, and laminate materials such as powder, resins, steel plates, paper and the like thereon to create a prototype. As such laminate shaping methods, there are known an ink-jet method, a powder method, an optical shaping method, a sheet lamination method, an extrusion method, and the like. Among these methods, in the ink-jet method, a liquefied material is injected, and then cured to form a layer through irradiation of ultraviolet light (UV), cooling or the like. With such a method, it is possible to apply the principle of an ink-jet printer thereto, which offers the advantage that high definition can be easily realized.

A three-dimensional shaping apparatus of a resin-lamination type is adapted to execute shaping by ejecting, onto a shaping plate, a model material configured to form the final shaped object and a supporting material, that is configured to support a base portion supporting the model and a protruding portion of the model material and that is finally removed, while scanning in the XY directions and laminating in a height direction. The model material and the supporting material are formed from resins having properties of being cured by irradiation with ultraviolet light. An ultraviolet-light lamp configured to emit ultraviolet light is scanned in the XY directions together with the nozzles for ejecting the model material and the supporting material so that the model material and the supporting material ejected from the nozzles are irradiated and cured with the ultraviolet light.

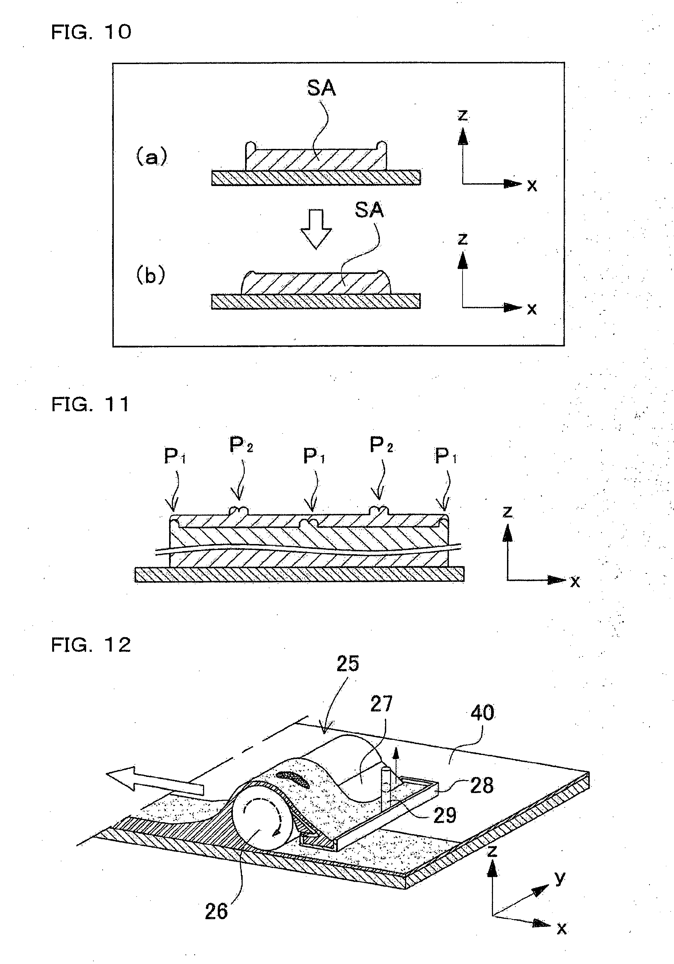

A three-dimensional shaping apparatus of an ink-jet type must remove an excess portion of resin ejected from a nozzle. Fig. 12 is a perspective view illustrating a configuration in which the excess portion of shaping material is removed with a roller portion. In this example, the surface of resin ejected onto a shaping plate 40 in a flowable state is leveled with a roller main body 26. The roller portion 25 includes a roller main body 26 that is a rotating body, a blade 27 disposed to protrude relative to the surface of the roller main body 26, a bath 28 configured to collect the shaping material scraped and removed by the blade 27, and a suction pipe 29 for ejecting shaping material collected in the bath 28. The roller main body 26 is rotated in the direction opposed to the travel direction of head portion 20 (the clockwise direction in FIG. 12) and scrapes up flowable shaping material. The scraped-up shaping material is attached to the roller main body 26, transported to the blade 27, and then scraped and removed with the blade 27 and guided into the bath 28. For this purpose, the blade 27 is fixed in an attitude having a downward gradient towards the bath 28. The suction pipe 29 is connected with a liquid waste passage, and draws shaping material that has collected in the bath 28 using a pump or the like and stores the material in a liquid waste tank (not illustrated).

Patent Document 1: Japanese Unexamined Patent Publication No. 2003-535712

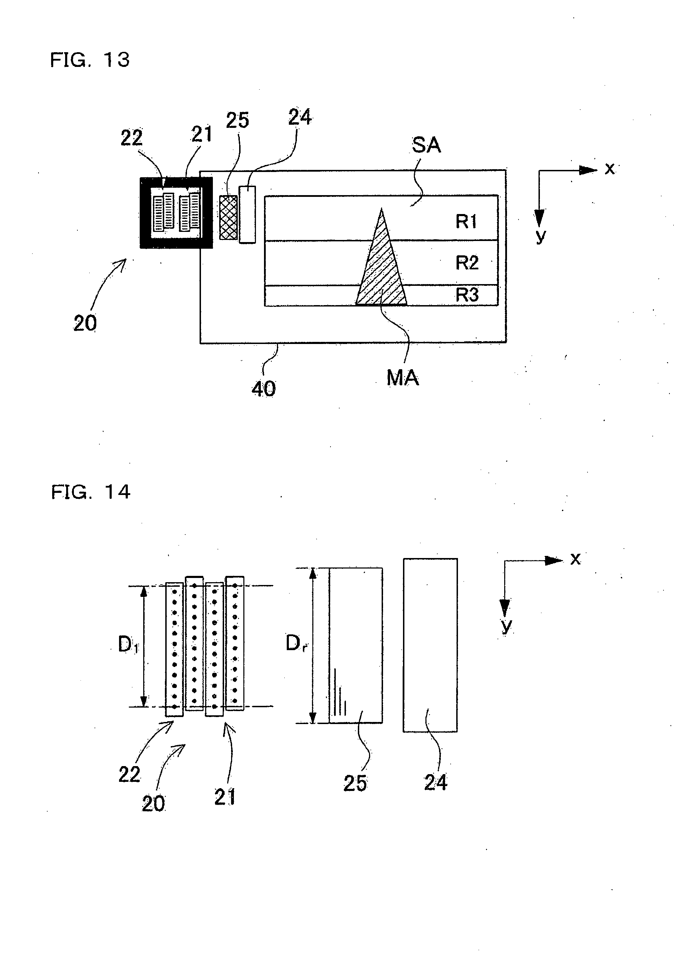

In this type of three-dimensional shaping apparatus, it is necessary to perform shaping operations by dividing a single layer into a plurality of sections in order to form a shaped object that has a width that is larger than the ejection width. In the example illustrated in the plan view in Fig. 13, the shaped object is divided into three sections R1 to R3 on the shaping plate 40 and the head portion 20 performs a reciprocating scan to thereby form a shaped object with a large surface area. The roller portion 25 in this type of three-dimensional shaping apparatus is adapted so that the width Dr of the roller portion 25 is larger than the ejection width as illustrated in Fig. 14 in consideration of the manufacturing tolerances to thereby ensure recovery of ejected resin.

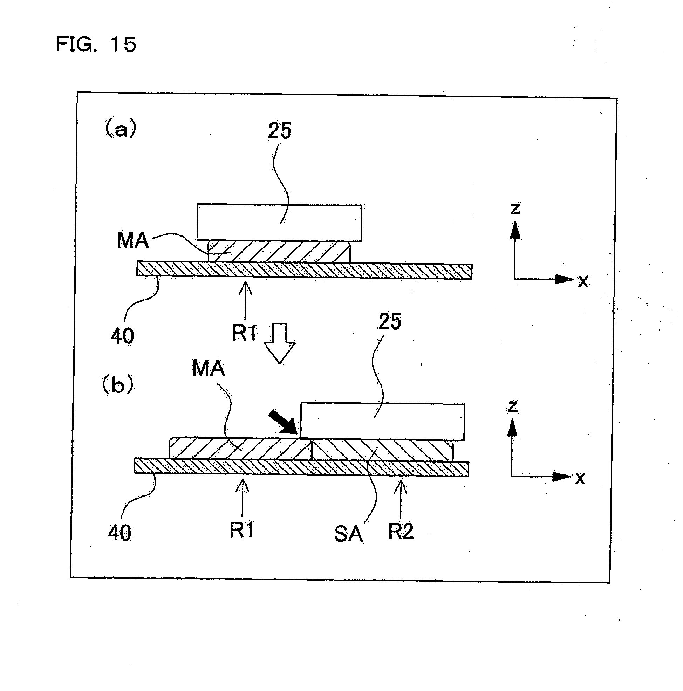

However, in the case of this type of roller portion 25, as illustrated in Fig. 15(a), after curing the first section R1 on the shaping plate 40, when shaping the adjacent section R2 as illustrated in Fig. 15(b), the roller portion 25 comes into contact with the end edge (the position indicated by the arrow in the figure) of the section R1 that is already prepared. As a result, a deviation is produced in the already cured shaped object and thereby reduces the accuracy of the shaped object. Furthermore, due to the fact that recovery is erroneously executed due to contact between the cured resin and the roller portion 25, as illustrated in Fig. 12, the problem arises that the resin that is already cured mixed into the flowable resin. When cured resin is recovered from the suction pipe 29, as illustrated by the broken line in Fig. 12, the interior of the suction pipe 29 or the liquid waste passage connected to the suction pipe 29 becomes clogged, recovered resin cannot be sent to the liquid waste tank, the recovered resin fills the bath, and flows out onto the shaping surface. US 2005/0104241 A2 discloses a method and an apparatus for printing a three-dimensional object including a roller to remove surplus of material.

As a strategy for the above mentioned problem, it has been suggested to increase the bonding between resin for example to thereby prevent a deviation even when the flowable resin comes into contact with the roller portion. Furthermore, a configuration has been adopted in which the supporting portion is hardened by mixing of model material and supporting material to thereby prevent erroneous recovery of resin after curing. However, when using either of the above methods, after obtaining a shaped object by curing of supporting material, there is the problem that removal of the supporting material from the shaped object is difficult.

On the other hand, it has been suggested to prevent collision by gradual offsetting of the shaping height of adjacent sections. However, in this method, there is a restriction that the height is lower than the height of one layer of the laminated resin layer. Therefore, since there is no meaning when the shaking or inclination of the roller portion is greater than the offset amount, as a result, there is the problem that strict preparation and adjustment is required in relation to the shaking and inclination of the roller portion.

The present invention is proposed in light of the above problems in the prior art, and the principal object of the present invention is to provide a three-dimensional shaping apparatus that avoids a situation in which resin is scraped off and removed by reason of contact of the roller portion with the resin after curing.

### SUMMARY OF THE INVENTION

In order to achieve the above object, a three-dimensional shaping apparatus according to a first aspect of the present invention is a three-dimensional shaping apparatus for repeatedly performing operations for ejecting and curing as shaping materials, onto a shaping plate 40, a model material MA configured to form a final shaped object and a supporting material SA configured to support a protruding portion of the model material MA and to be finally removed, while performing scanning at least in a single direction, and thereby to form slices having a predetermined thickness in a height direction into a laminated configuration, and laminating these slices in the height direction for performing shaping. The three-dimensional shaping apparatus includes the shaping plate 40 for placing a shaped object thereon, a shaping-material ejection device including a plurality of model-material ejection nozzles 21 for ejecting the model material MA and a plurality of supporting-material ejection nozzles 22 for ejecting the supporting material SA, such that these plurality of nozzles are arranged in a single direction, a roller portion 25 pressing the upper surface of the model material MA and the supporting material SA when in a flowable state and scraping and removing an excess portion of the model material MA and the supporting material SA, a curing device 24 for curing the model material MA and the supporting material SA, a head portion 20 including the shaping-material ejection device, the roller portion 25 and the curing device 24, a horizontal driving device for reciprocating scanning of the head portion 20 in a horizontal direction, a vertical driving device for moving the positions of the head portion 20 and the shaping plate 40 with respect to each other in the height direction, and a control device 10 for controlling the driving of the horizontal driving device and the vertical driving device and the ejection of shaping material by the shaping-material ejection device and curing by the curing device 24. Therefore, the width of the roller portion 25 is less than the width of the model-material ejection nozzle 21 provided on the shaping-material ejection device and the width of the supporting-material ejection nozzle 22. In this manner, even when one layer is shaped by division into a plurality of sections, the roller portion does not come into contact with the shaping material, and contact with already shaped portions can be avoided to thereby enable enhanced accuracy, and avoid erroneous recovery of resin after curing and clogging of the suction pipe.

Further, in a three-dimensional shaping apparatus according to a second aspect, when forming each layer based on the arbitrary data for each slice layer with the shaping-material ejection device, printing can be executed by offsetting from the previous slice. In this manner, the position at which the roller portion is not applied can be varied in relation to the slice, and a residual effect of unrecovered resin does not accumulate and can be uniformly suppressed.

In a three-dimensional shaping apparatus according to a third aspect, a configuration in which the model-material ejection nozzles 21 are disposed with an offset in a plurality of rows, the width of the roller portion 25 can be formed to be less than the width of the total set of the plurality of rows of the model-material ejection nozzles 21. In this manner, the resolution can be improved by disposing the model-material ejection nozzles with an offset, the width of the roller portion can be reduced in relation to the model-material ejection nozzles disposed in an offset configuration, and even when the same slice is shaped by division into a plurality of sections, the roller portion does not make contact with the shaped body, and high accuracy shaping can be executed.

In a three-dimensional shaping apparatus according to a fourth aspect, the width of the model-material ejection nozzles 21 and the width of the supporting-material ejection nozzles 22 can be adapted to be substantially equal.

In a three-dimensional shaping apparatus according to a fifth aspect, the model material MA and the supporting material SA are not ejected at the same time in the same reciprocating scan on the line on which the model material MA and the supporting material SA are positioned in the scanning direction of the shaped object, and only one of the shaping material is ejected and cured. In this manner, since the model material and the supporting material are not ejected at the same time in the same reciprocating scan, and only one is ejected and cured, a mixed configuration resulting from a flowable state at the boundary surface between the model material and the supporting material adjacent to the line can be avoided to thereby obtain the advantage that the boundary surface has a superior configuration.

Fig. 1 is a block diagram illustrating a three-dimensional shaping apparatus in a first embodiment.
Fig. 2 is a block diagram illustrating a three-dimensional shaping apparatus in a modified example.
Fig. 3 is a plan view illustrating a state where a head portion is moved in XY directions.
Fig. 4 is a perspective view illustrating a shaped object shaped from model material and supporting material.
Fig. 5 is a sectional view of Fig. 4.
Fig. 6 is a perspective view of the external appearance of the head portion.
Fig. 7 is a perspective view when the excess amount of the shaping material is removed with the roller portion.
Fig. 8 is a schematic plan view illustrating the width of a roller main body and an ejection nozzle of the roller portion according to the first embodiment.
Fig. 9 is a schematic sectional view illustrating the configuration in which the same layer of the shaped object is shaped by division into a plurality of sections.
Fig. 10(a) is a schematic sectional view of the theoretical configuration immediately after recovering an excess portion of resin with the roller portion, and Fig. 10(b) illustrates the configuration when the resin in Fig. 10(a) changes shape due to its weight.
Fig. 11 is a schematic sectional view illustrating a configuration in which a plurality of layers is laminated using the method according to the second embodiment.
Fig. 12 is a perspective view illustrating the structure of the roller portion.
Fig. 13 is a schematic plan view of the configuration of shaping by division of the shaped object on the shaping plate with the roller portion into a plurality of sections.
Fig. 14 is a schematic plan view illustrating the width of the roller main body and the ejection nozzle of the roller portion.
Fig. 15(a) is a schematic sectional view illustrating the configuration of shaping the section R1 in Fig. 13 with the roller portion, and Fig. 15(b) is a schematic sectional view illustrating the configuration of contact of the roller portion when shaping the adjacent section R2 with the section R1 after curing.

### DETAILED DESCRIPTION OF PREFERRED EMBODIMENTS

Hereinafter, embodiments of the present invention will be described, with reference to the drawings. However, the embodiments which will be described below merely illustrate a three-dimensional shaping apparatus for realizing the technical concepts of the present invention, and the present invention is not restricted to the embodiments which will be described below. Further, the present specification is not intended to restrict the components defined in the claims to members according to the embodiments. Particularly, the sizes, the materials and the shapes of components described in the embodiments, their relative placement, and the like are not intended to restrict the scope of the present invention which is defined by appended claims and are merely illustrated as examples, unless otherwise specified. Further, the sizes of members, the positional relationships and the like are exaggeratedly illustrated in the drawings, in some cases, for clarification of the description. Further, in the following description, like names and like reference numerals are used to denote the same members or members with the same qualities, and detailed descriptions thereof will not be repeated. Further, the respective components constituting the present invention may be realized, such that a single member constitutes a plurality of components so that the single member can function as the plurality of components, or such that a plurality of members share the functions of a single member.

### (First Embodiment)

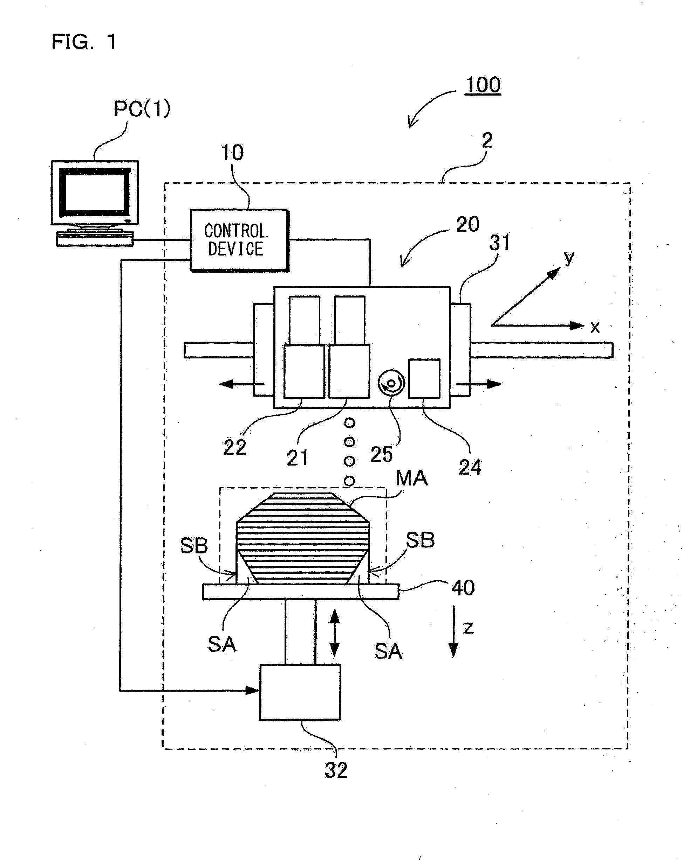

Fig. 1 illustrates a block diagram of a three-dimensional shaping system 100 according to a first embodiment of the present invention. An example of application to a three-dimensional shaping apparatus in an ink-jet manner will be described as an example of the three-dimensional shaping apparatus. However, the present invention is not restricted to a three-dimensional shaping apparatus using an ink-jet manner, and may be used in relation to a three-dimensional shaping apparatus that uses another system, for example a lamination and shaping method such as a powder method, an optical shaping method, a sheet lamination method, an extrusion method, and the like. The three-dimensional shaping system 100 is adapted to eject shaping materials in a liquid state in an ink-jet manner, and then, cure and laminate the materials for fabricating an arbitrary shaped object. A model material MA configured to form a final shaped object and a supporting material SA configured to be shaped to support a protruding portion of the model material MA and to be finally removed therefrom are employed as such shaping materials.

The three-dimensional shaping system 100 illustrated in Fig. 1 is constituted by a three-dimensional shaping apparatus 2, and a set-data creating apparatus 1 (a computer PC in Fig. 1) which transmits set data including shaping object data and shaping conditions to the three-dimensional shaping apparatus 2. The three-dimensional shaping apparatus 2 includes a control device 10, a head portion 20, and a shaping plate 40. The head portion 20 includes, as shaping-material ejection devices, model-material ejection nozzles 21 for ejecting the model material MA and supporting-material ejection nozzles 22 for ejecting the supporting material SA. The head portion 20 is further provided with a roller portion 25 for scraping off excess portions of these ejected shaping materials to thereby adapt the thickness of the uppermost layer of the shaped object at that time and smooth the surfaces of the shaping materials, and further, is provided with a curing device 24 for curing the shaping materials. Further, in order to cause the model-material ejection nozzles 21 and the supporting-material ejection nozzles 22 to eject, in an ink-jet manner, the shaping materials in a liquid or fluid state to suitable positions on the shaping plate 40 with respect to the horizontal direction of the head portion 20, there are provided an XY direction driving portion 31 and a Z-direction driving portion 32, as a horizontal driving device for reciprocating scanning in an X direction and also in a Y direction orthogonal to the X direction, and a vertical driving device for moving the positions of the head portion 20 and the shaping plate 40 with respect to each other in the height direction. As used herein, the Y direction is the direction of arrangement of a plurality of orifices having model material ejection nozzles 21 and supporting material ejection nozzles, and the X direction is the direction that is orthogonal to the Y direction in the horizontal plane.

The computer PC functions as the set-data creating apparatus 1. On receiving, from outside, an input of basic data for a three-dimensional shaped object, such as an input of model data designed through a three-dimensional CAD and the like, the CAD data is firstly converted into STL data (Stereo Lithography Data), for example, and then cross-section data is created by slicing the STL data into a plurality of thin cross-sectional parts, and then the slice data is transmitted to the three-dimensional shaping apparatus 2 collectively or on a slice-layer by slice-layer basis. At this time, in accordance with a determined attitude, on the shaping plate 40, of the model data designed through the three-dimensional CAD and the like (actually, the STL data resulting from the conversion), settings in relation to the positions for provision of the supporting material SA are performed in relation to portions or spaces in which the model made of the model material at this attitude is required to be supported, and based on these data, slice data corresponding to respective layers are created. The control device 10 takes the cross-section data from the computer PC and controls the head portion 20, the XY-direction driving portion 31, and the Z-direction driving portion 32 according to this data. Under the control by the control device 10, the XY-direction driving portion 31 is operated, and also, the model-material ejection nozzles 21 and the supporting-material ejection nozzles 22 in the head portion 20 are caused to eject, as droplets, the model material MA and the supporting material SA as shaping materials, to suitable positions on the shaping plate 40, so that a cross-sectional shape is formed based on the cross-section data provided by the computer PC. Further, the model material MA, which is one of the shaping materials ejected on the shaping plate 40, is at least cured, so that the model material MA is changed from the liquid or fluid state to a solid, and thus, is cured. Through such operations, a cross-sectional member corresponding to a single layer, namely a slice, is created. Although slice data may be produced on the side of the three-dimensional shaping apparatus 2, in that configuration, shaping parameters that must be determined by an operation such as the thickness of each slice must be sent from the computer PC side to the three-dimensional shaping apparatus 2.

### (Slice)

Herein, "slice" refers to a unit for laminating layers in the z direction of the shaped object, and the number of slices is equal to the value of the height divided by the laminated layer thickness. Actually, regarding requirements for the determination of the thickness of each slice, a minimum settable thickness is determined, according to the minimum unit amounts of materials which can be ejected from the respective ejection nozzles, variations caused by eccentricity of the roller in the roller portion 25 in the upward and downward directions, and the like. A value determined based on the aforementioned approach is defined as the minimum slice value, and thereafter, a user can finally determine the amount of each slice, in view of the required shaping accuracy and the required shaping speed, for example. That is, if the user selects prioritizing the shaping accuracy, the aforementioned minimum slice value or a value close thereto is determined as the amount of each slice. On the other hand, if the user prioritizes the shaping speed, the amount of each slice can be determined in such a way as to maintain a minimum necessary shaping accuracy. Further, as other methods, it is possible to employ a method which causes the user to sensuously select a ratio between the shaping accuracy and the shaping speed, or a method which causes the user to input a permissible maximum shaping time, thus displays some combinations of shaping times and shaping accuracies as candidates, and further causes the user to select a preferred condition out of these candidates.

Further, the shaping action for one slice data includes a series of steps of ejecting the shaping materials in a liquid or fluid state from the model-material ejection nozzles 21 and the supporting-material ejection nozzles 22 in an ink-jet manner at least in forward paths or rearward paths at least during reciprocating operations of the head portion 20 in the X direction (the main scanning direction of the head portion 20), further causing the roller portion 25 to operate to smooth the surfaces of the shaped object in a fluid state at least in forward paths or rearward paths, and then directing light with a specific wavelength from the curing device 24 to the smoothed surfaces of the shaped object to thereby cure the shaped object by performing these series of steps at least once. But it goes without saying that the number of times these steps are performed is automatically changed according to the thickness indicated by the slice data and the required shaping accuracy. When the shaping material used in the shaping is cured at a predetermined temperature, the curing device 24 according to the present invention may be configured as a cooling or a heating device, and furthermore, the curing device may be omitted when applying natural curing.

On the other hand, the maximum thickness which can be formed on the shaping plate through a single ejection from the model-material ejection nozzles 21 and the supporting material ejection nozzles 22 at least in a forward or rearward path is determined by a unit ejection amount which can maintain the cross-sectional shapes of ejected liquid droplets at substantially-circular shapes, after the liquid droplets have landed thereon.

### (Shaping Plate 40)

The shaping plate 40 can be raised and lowered by the Z-direction driving portion 32. After a single slice has been formed, the control device 10 controls the Z-direction driving portion 32 in such a way as to lower the shaping plate 40 by a distance corresponding to the thickness of the single slice. Further, operations same as the above are repeatedly performed, so that new slices are laminated on the upper side (the upper surface) of the first single slice. Thus, a plurality of thin slices is successively created and laminated as described above, thereby attaining shaping for a shaped object.

Further, in cases where the shaped object has a protrusion, that is, a so-called overhang shape in the X-Y plane more than the shaped portion positioned below in the Z direction (that is to say, the height direction), the computer PC adds an overhang-supporting-portion shape as required, when the computer PC converts the shaped object into data. In other words, a shaped object that includes an overhang shape is a shaped object that has a portion (overhang portion) that forms a slice of new model material on the upper surface of the portion on which a slice of model material that has already been formed is not present. Further, the control device 10 performs shaping of an overhang supporting portion SB based on the overhang- supporting-portion shape, at the same time as the shaping of the model material MA which is to form the final shaped object. More specifically, the supporting material SA, which is different from the model material MA, is ejected as droplets from the supporting-material ejection nozzles 22 to form the overhang supporting portion SB. After the shaping, the supporting material SA forming the overhang supporting portion SB is removed, thereby providing the target three-dimensional shaped object.

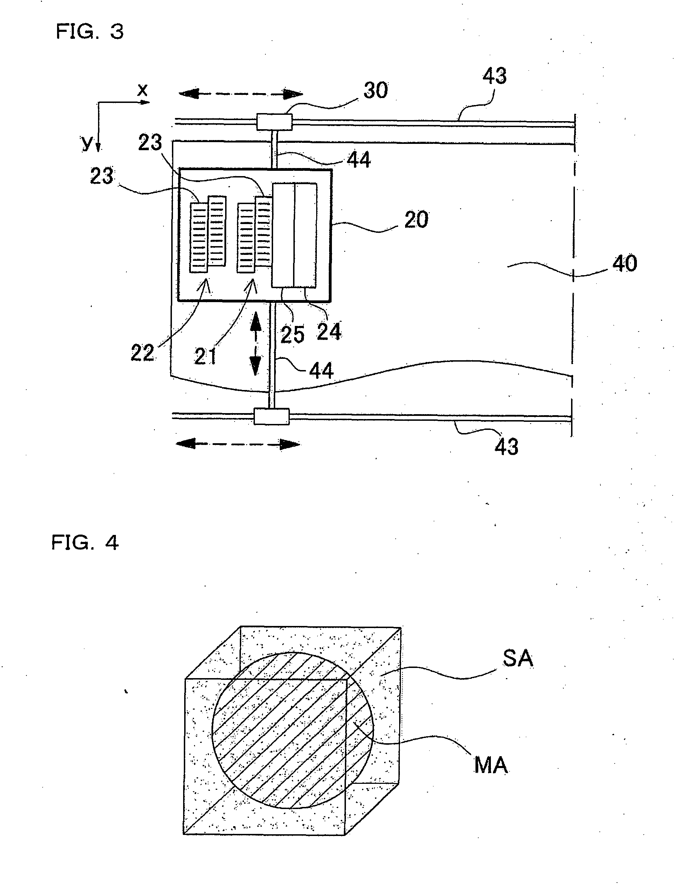

The head portion 20 is moved by a head moving device 30 in the horizontal direction, namely in XY directions, as illustrated in a plan view in Fig. 3 which is not according to appended claims. The head portion 20 is supported on an X direction displacing rail 43 that is a pair of guide mechanisms for the X direction (main scanning direction) respectively disposed in a vertical configuration in the figure. An X direction driving portion (not illustrated) is provided along one of the X direction displacing rails 43 on the base side that supports the head portion 20. A Y direction displacing rail 44 for displacing the head portion 20 in the Y direction (sub-scanning direction) is provided on a gate-shaped frame that places the head portion 20 on the X direction displacing rail 43. A driving portion (not illustrated) is provided for driving the head portion 20 along the Y direction displacing rail 44. The head portion 20 can be displaced in the X and the Y directions by the driving portion.

The head portion 20 illustrated in the example in Fig. 4 is divided into an ejection head unit 20A provided with the ejection nozzle and a recovery and curing head unit 20B provided with the roller portion and a curing device. A rail guide 45 is provided between the ejection head unit 20A and the recovery and curing head unit 20B to enable passage of the Y direction displacing rail 44 that displaces the head portion 20. The head portion 20 as illustrated in the plan view in Fig. 3 undergoes reciprocating displacement in the Y direction along the Y direction displacing rail 44. Both ends of the Y direction displacing rail 44 are supported on the head moving device 30. The head moving device 30 undergoes reciprocating displacement in the X direction along the pair of X direction displacing rails 43 provided in parallel along the vertical dimension of the shaping plate 40 to straddle the shaping plate 40 in the vertical direction. In this manner, the head portion 20 can be displaced to an arbitrary position on the XY plane on the shaping plate.

The shaping plate 40 is moved in the height direction, namely in the Z direction, by the plate raising/lowering device (the Z-direction driving portion 32), as illustrated in Fig. 1. Accordingly, the heights of the head portion 20 and the shaping plate 40 can be changed with respect to each other, thereby enabling stereoscopic shaping. More specifically, in order to eject the model material MA and the supporting material SA as shaping materials to a suitable position from the model-material ejection nozzles 21 and the supporting-material ejection nozzles 22 based on the slice data, the head portion 20 is reciprocally operated in the X direction by the head moving device 30, and then, the model material MA and the supporting material SA are ejected from a plurality of orifices which are provided in the ejection nozzles 21 and 22 and extended in the Y direction. Further, as illustrated in Fig. 3, in cases where the width of the ejection nozzles 21 and 22 in the Y direction is smaller than the width in the Y direction over which shaping can be performed on the shaping plate 40, and also, the width in the Y direction which is indicated by the shaping model data is larger than the entire length of the orifices extending in the Y direction, the respective ejection nozzles 21 and 22 are reciprocally operated in the X direction at predetermined positions, thereafter the respective ejection nozzles 21 and 22 are shifted by a predetermined amount in the Y direction and then are reciprocally scanned at these positions. In addition, the model material MA and the supporting material SA are ejected to suitable positions based on the slice data. These operations are repeated to thereby create a shaped object corresponding to all the set shaping data.

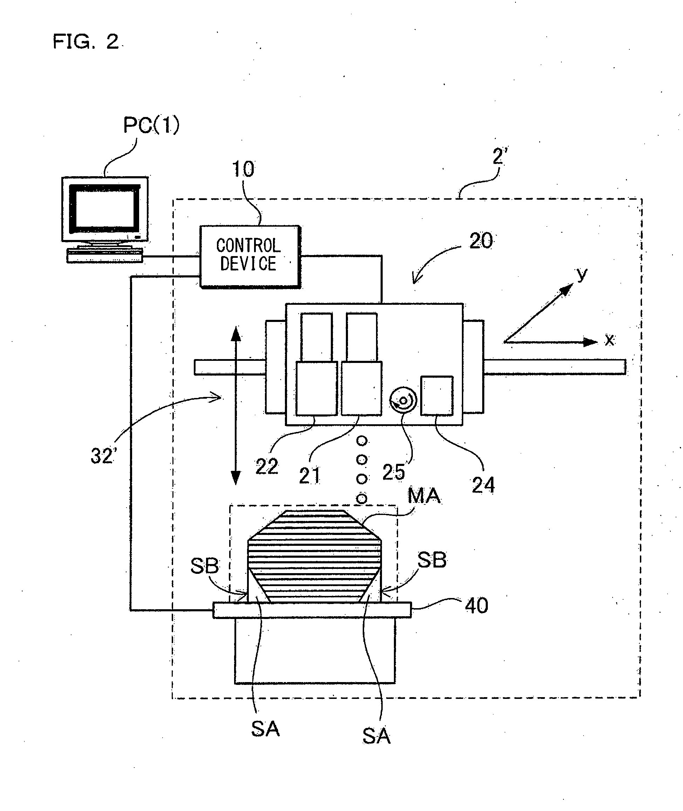

While, in the example of Fig. 1, the plate raising/lowering device for raising and lowering the shaping plate 40 is employed as the Z-direction driving portion 32, the present invention is not limited to this example, and as in a three-dimensional shaping apparatus 2' illustrated in Fig. 2, it is also possible to employ a Z-direction driving portion 32' for moving the head portion in the Z direction, while the plate 40 is fixed in the height direction. Further, movement in the XY direction can be also attained by moving the shaping plate while fixing the head portion. It is possible to eliminate the necessity of shifting of the head portion 20 in the Y direction as described above, by making the width of the respective nozzles substantially equal to the width in the Y direction over which shaping can be performed on the shaping plate 40. However, even in such cases, in order to increase the resolution in the Y direction for the shaped object, which is determined by the intervals between the orifices provided in the nozzles, for example, it is possible to shift the head portion 20 in the Y direction, such that each orifice is positioned between the positions of orifices during the previous shaping.

### (Control Device 10)

The control device 10 controls the pattern of ejections of the shaping materials. That is, the control device 10 causes the shaping-material ejection device to eject the model material MA and the supporting material SA onto the shaping plate 40 at least in one of forward and rearward paths, during reciprocating scanning in the X direction, while reciprocally scanning the head portion 20 in a single direction, and further, causing the curing device 24 to cure the model material MA and the supporting material SA at least in one of the forward and rearward paths after the shaping-material ejecting device has ejected the shaping materials onto the shaping plate, thereby creating slices. Further, the control device 10 moves the positions of the shaping plate 40 and the head portion 20 with respect to each other in the height direction, and repeats laminating of slices to attain shaping. As described later in detail, the smoothing of the surfaces of the shaping materials by the roller portion 25 is performed at least in one of forward and rearward paths, after the shaping-material ejection device has ejected the shaping materials onto the shaping plate, but before the curing device 24 cures the surfaces of the shaping materials.

Through a single reciprocating scanning in the X direction, the control device 10 causes ejection of any one shaping material out of the model material MA and the supporting material SA, smoothing and removal of an excess portion on the surface of the shaping material with the roller portion 25, and further cures it with the curing device 24. Through the next and subsequent reciprocating scannings, the control device 10 causes ejection of the other shaping material which has not been ejected, smoothing of the surface of the shaping material, and curing. This series of processes is performed at least once for forming a single slice. As a matter of course, the present invention includes repeating, a plurality of times, the aforementioned series of processes corresponding to slice data for a single layer, according to the shaping time period and the final model surface accuracy required by the user, for example. Accordingly, the surface of any one of the model material MA and the supporting material SA can be smoothed in a fluid state, cured, and thereafter, the other of the model material MA and the supporting material SA is ejected and separately cured. This offers the advantage of effective prevention of mixture of the model material MA and the supporting material SA at the boundary surface therebetween.

### (Shaping Material)

In this example, a configuration has been described in which model material MA is ejected and then supporting material SA is ejected. However, conversely, the supporting material may be ejected firstly followed by ejection of the model material. Furthermore, although in this example, a method of separate ejection and curing of the model material and supporting material for shaping has been described in which either one of the shaping material is ejected first, and cured, and then the other shaping material is ejected and cured, there is no limitation to this method, and the model material and the supporting material may be ejected at the same time.

### (Shaping Material)

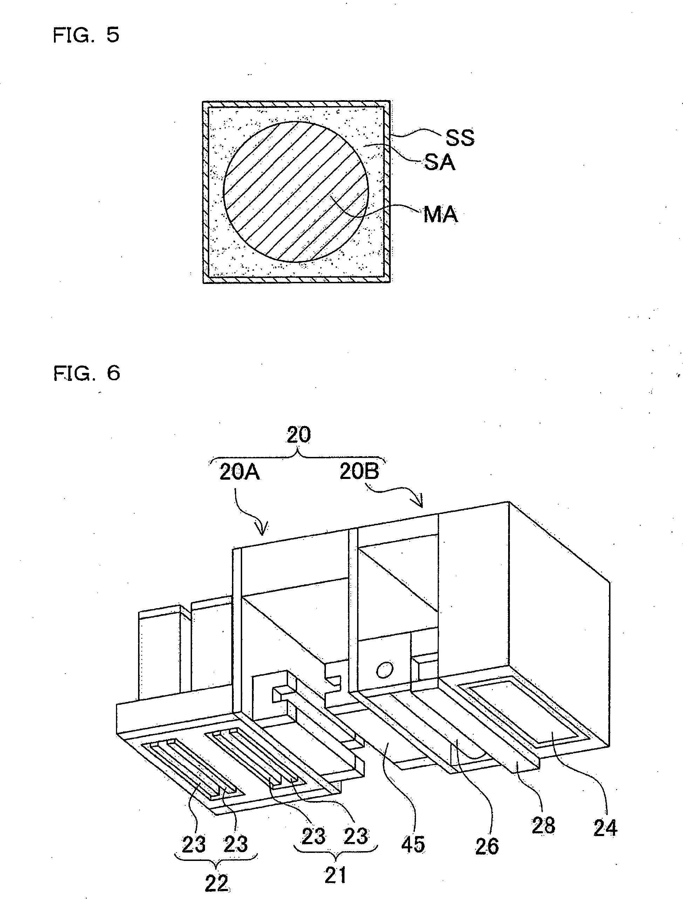

As described above, as shaping materials, the model material MA is to form a final shaped object, and the supporting material SA is to support protruding portions of the model material MA and to be removed finally. Fig. 4 is a perspective view of a shaped object that is shaped by covering the periphery of spherically shaped model material MA with rectangular parallelepiped supporting material SA, and Fig. 5 is a sectional view of Fig. 4.

### (Curing Device 24)

As the model material MA, it is possible to employ a photo-curing resin, such as an UV curing resin. In this case, the curing device 24 is a light emitting device capable of emitting light containing at least a specific wavelength which causes the material of the model material MA to be cured in reaction thereto and, for example, is an ultraviolet-ray emitting device such as an UV lamp. Such a UV light lamp includes a halogen lamp, a mercury lamp, an LED and the like. Further, in this example, the supporting material SA is also formed from a UV curing resin. In cases of employing an UV curing resin which can be cured by UV rays having the same wavelength, it is possible to employ the same ultraviolet-ray emitting device, thereby offering the advantage of utilization of a common light source.

### (Model Material MA)

Further, as the model material MA, it is possible to employ a thermoplastic resin. In this case, a cooling device is employed as the curing device 24. Further, in cases of employing thermoplastic resins as both the model material and the supporting material, when the model material has a melting point higher than the melting point of the supporting material, it is possible to remove the supporting material through melting by heating the shaped object after the completion of layer laminations to a temperature higher than the melting point of the supporting material and lower than the melting point of the model material, and then maintaining that temperature. Also, it is possible to employ a photo-curing resin as one of the model material and the supporting material, while employing a thermoplastic resin as the other of the model material and the supporting material.

Alternatively, it is possible to employ, as the model material, a material which can be cured by chemically reacting with a curing material. Further, it is also possible to mix a liquid modifier agent into the model material as required in order to adjust injection characteristics such as viscosity and surface tension. Further, injection characteristics can be changed through temperature adjustments. Other exemplary model materials include UV photopolymers, epoxy resins, acrylic resins and urethanes.

### (Supporting Material SA)

Basically, the same material as the model material described above may be used in relation to the supporting material SA. However, from the point of view of a material that facilitates final removal as the supporting material, it is desirable to add a material that enables removal to a material that is similar to the model material. Consequently, more specifically, it is possible to employ a water-swellable gel, wax, a thermoplastic resin, a water-soluble material, a meltable material and the like. For removing the supporting material SA, it is possible to employ appropriate methods, for example, dynamic cleaning such as water solution, heating, chemical reactions and hydraulic cleaning, or separation utilizing thermal expansion differences through melting by irradiation of electromagnetic waves, according to the properties of the supporting material.

The supporting material is finally removed, and therefore requires a characteristic of ease of removal. For example, a water soluble supporting material enables removal by melting of the supporting material by immersion into a water bath after shaping of the shaped object. On the other hand, an increase in the solubility characteristics of the supporting material means that the strength of the supporting material is reduced, and tends to cause deliquescence, loss of form and sagging during temperature increase. When the rigidity of the supporting material is insufficient, the capacity for supporting the model material is reduced and shaping of the model material on the upper surface of the supporting material becomes difficult, and the accuracy associated with the model material may be reduced. On the other hand, when the rigidity of the supporting material is increased, if the supporting material is removed from the final shaped object, elution in water is problematic, and time is required for removal. As a result of the requirement for these contrary characteristics in the supporting material, obtaining a supporting material having optimal characteristics has been typically difficult.

As shown in this embodiment, when using a water soluble material as the supporting material for example, the formation of a supporting shell SS as the outer shell of supporting material SA maximizes suppression of direct contact with the air by the supporting material when shaping the model in the shaping apparatus. As a result, since the supporting material can be inhibited from absorbing moisture in the air, deformation of the supporting material or deformation of the model material due to deformation of the supporting material during shaping can be prevented. Furthermore, the formation of the supporting shell SS enables suppression of absorption of moisture in the air by the supporting material in an inner portion, it is possible to increase the solubility performance of the supporting material, and as a result, enables enhancement of the elution speed of the supporting material when immersed into a solvent such as water during removal of the supporting material. This configuration has the advantage of enabling sufficient rigidity while enabling removal of the supporting material in a short time by increasing elution by breaking the supporting material SA of the outer shell during removal. In the example illustrated in Fig. 4 and Fig. 5, the supporting shell SS covered by the rectangular parallelepiped surface and removing the supporting material SA in the inner portion.

### (Head Portion 20)

Fig. 6 illustrates an example of the head portion 20 in the ink-jet type three-dimensional shaping apparatus. The head portion 20 illustrated in the figure is provided with dedicated ejection nozzles for individually ejecting a model material MA and a supporting material SA as shaping-material ejection devices. More specifically, the model-material ejection nozzles 21 for ejecting the model material MA and the supporting-material ejection nozzles 22 for ejecting the supporting material SA are spaced apart from each other in parallel with each other. The ejection nozzles are both provided with two nozzle rows 23.

In the head portion 20, the supporting-material ejection nozzles 22, the model-material ejection nozzles 21, the roller portion 25 and the curing device 24 are integrally provided in this order from the left side. Each of the ejection nozzles is adapted to eject an ink-type shaping material in a configuration of a piezoelectric-device type ink-jet printing head. Further, the shaping material is adjusted to have a viscosity enabling ejection from the ejection nozzles.

In the example of Fig. 6, the head portion 20 is adapted to eject the model material MA at first, and thereafter, eject the supporting material SA. Further, the head portion 20 is adapted to eject the shaping materials in forward paths (in the left-to-right direction in the figure), scrape off excess resin with the roller portion 25 from the uppermost surface of the shaping material in the rearward path (from the right to the left in the figure), and after smoothing, to cure the smoothed resin with the curing device 24.

### (Roller Portion 25)

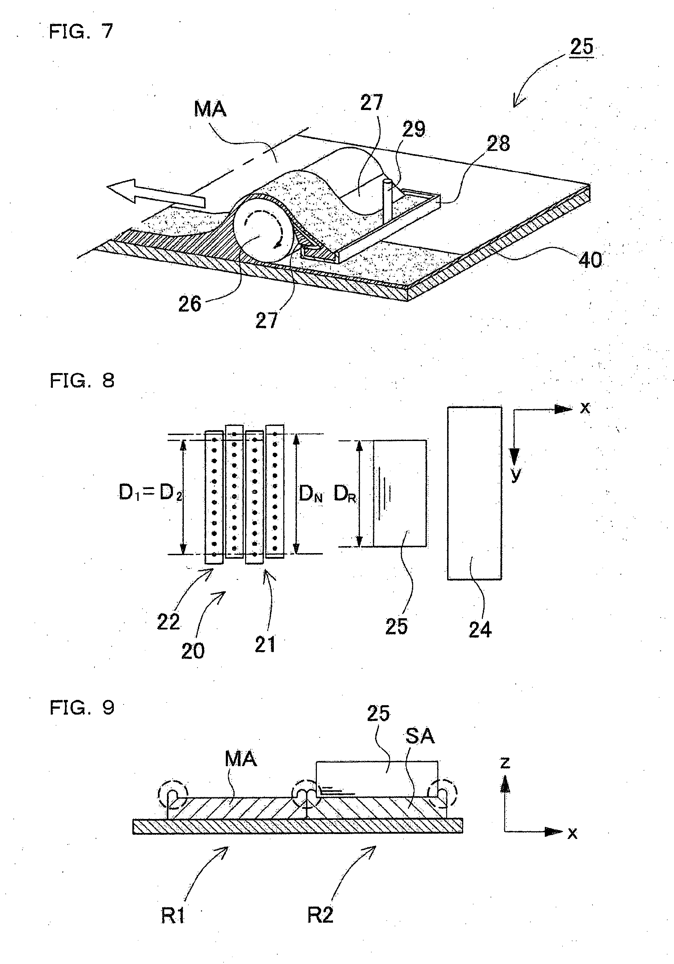

The head portion 20 is further provided with the roller portion 25 for smoothing the surfaces of the shaping materials by pressing the surfaces of the ejected model material MA and the ejected supporting material SA in flowable states and by removing excess portions of the shaping materials. The configuration of operations of this roller portion 25 will be described with reference to the schematic view in Fig. 7. In this example, there is illustrated a state where a roller main body 26 is smoothing the surface of an ejected model material MA in a flowable state. The roller portion 25 includes the roller main body 26 as a rotational member, a blade 27 placed to protrude toward the surface of the roller main body 26, a bath 28 for storing the shaping material scraped off by the blade 27, and a suction pipe 29 for ejecting the shaping material stored in the bath 28. The roller main body 26 is rotatably supported and presses the flowable resin while rotating to thereby smooth the resin surface and remove and recover an excess portion. The roller main body 26 is rotated in the direction opposite from the direction of traveling of the head portion 20 (in the clockwise direction in Fig. 7) when scraping off an excess portion of resin with the roller main body 26 and thereby scrapes away the flowable shaping material. The shaping material having been scraped away adheres to the roller main body 26 and is transferred to the blade 27, and thereafter, is scraped off by the blade 27 and guided into the bath 28. Therefore, the blade 27 is disposed at a position behind the roller main body 26 relative to the direction of travel when the roller main body 26 abuts with the resin surface, and is fixed at an attitude inclined downwardly toward the bath 28. In the same manner, the bath (tub) 28 is disposed on the same side as the blade 27 relative to the roller main body 26, and is disposed below the blade 27. Further, the suction pipe 29 is connected to a pump and is adapted to suction the shaping material stored in the bath 28 and then eject it. In this example, the roller main body 26 is made to have an outer shape with a diameter φ of about 20 mm.

The roller portion 25 is adapted to perform scraping when the head portion 20 travels in the right-to-left direction in the figure. In other words, when the model-material ejection nozzles 21 and the supporting-material ejection nozzles 22 are caused to eject the model material MA and the supporting material SA, respectively, to suitable positions based on slice data, while the head portion 20 travels in the left-to-right direction, the roller portion 25 does not come into contact with the shaping materials, and similarly, the curing device 24 does not perform irradiation from the light source. The roller portion 25 performs the aforementioned scraping operation, and also, the curing device 24 operates as a light source which emits light for curing at least the model material MA in the main scanning direction as a rearward path from the right to the left after the respective nozzles 21 and 22 are caused to eject the shaping materials at least, for example, in a forward path in the direction of left-to-right main scanning of the head portion 20 in the figure.

The light source of the curing device 24 is disposed in front of the direction of travel of the model-material ejection nozzles 21 and the supporting-material ejection nozzles 22, and therefore even when the light source is lit, ejected resin in a fluid state before smoothing by the roller portion 25 is not irradiated. On the other hand, it is of course possible to turn off the light source of the curing device 24 at a timing other than that required positively. Furthermore, a configuration is possible in which a plurality of curing devices is provided. For example, a first curing device and a second curing device may be provided as a curing device, and curing may be provisionally performed by the first curing device onto resin after ejection, and then further curing may be performed on resin by the second curing device. The provision of the curing device in a multistage configuration in this manner enables sufficient performance of the curing capacity of the resin. Furthermore, use of this configuration enables scraping off of excess resin by the roller portion after provisional curing using the first curing device when sufficient fluidity is still present in the resin even after application of the first curing device for provisional curing. That is to say, it is not necessary for all the curing devices to be disposed on the subsequent stage to the roller portion.

As illustrated in Figs. 1 and 6, relative to the direction of travel of the head portion 20, the roller portion 25 is placed in front of the curing device 24, to the left in the figure. As a result, firstly, the uncured shaping materials are scraped off by the roller portion 25, and thereafter, the shaping materials are cured by the curing device 24. Due to this placement, the scraping and curing of the shaping materials can be performed along the same path, thereby offering the advantage of high efficiency processing.

The basic concept of the disposition of the supporting-material ejection nozzle 22, the model-material ejection nozzle 21, the roller portion 25 and the curing device 24 along the X axis direction is as follows. When the direction of forward travel in the main scanning direction of the head portion 20 is considered as a base, either one of the supporting-material ejection nozzle 22 and the model-material ejection nozzle 21 may be positioned in front of the other. In relation to this nozzle layout, when the roller portion 25 and the curing device 24 perform a roller operation on the forward path, in the forward direction of travel, the roller portion 25 and the curing device 24 are disposed in order after the supporting-material ejection nozzle 22 and the model-material ejection nozzle 21, and when the roller operation is performed on the rearward path, the roller portion 25 and the curing device 24 may be disposed in order after the supporting-material ejection nozzle 22 and the model-material ejection nozzle 21 in the rearward path of travel.

In the above embodiment, a method of irradiation with UV light is adopted in which, after ejecting resin from the head portion 20 to form a new uppermost layer, and after scraping off excess resin with the roller portion 25 in relation to the resin layer in the uppermost layer in an uncured state during shaping, at least the uppermost resin layer is cured by the curing device 24.

However in addition to this configuration, a multistep configuration may be adopted in relation to the curing device as described above. For example, after ejecting resin from the head portion 20 to form a new uppermost layer, and after performing a single irradiation operation with the curing device 24 in relation to the uppermost resin layer including the excess resin layer, scraping of the excess resin layer is executed using the roller portion 25 on the uncured uppermost resin layer during shaping, and then the curing device 24 re-performs irradiation of UV light to cure at least the uppermost resin layer. In this case, the curing device 24 can perform the irradiation operation twice as described above by provision of a pair of curing devices in the transverse direction to sandwich the supporting-material ejection nozzle 22 and the model-material ejection nozzle 21 in the X direction in relation to the head portion 20, that is to say, in the main scanning direction of the head portion 20.

Furthermore, in this case, in order to achieve a finally desired degree of curing of the resin by a combination of the first irradiation and the second irradiation, the resin after the first irradiation is not in a cured state, and is a fluid semi-cured state so that a scraping operation can be performed thereafter by the roller portion 25. Consequently, in this situation, the state of the uppermost layer before scraping with the roller portion 25 is an uncured state or a fluid state.

### (Width of Roller Portion 25)

The width of the roller portion 25 is formed to be less than the width of the model-material ejection nozzle 21 and the supporting-material ejection nozzle 22 provided on the shaping-material ejection device. Each of the nozzles includes a plurality of orifices for ejecting resin formed to be substantially parallel with the direction of sub-scanning that is orthogonal to the main scanning direction of the head portion 20 and are aligned with a predetermined interval.

The width of each nozzle as described above means the distance between the orifices that are positioned on both end portions in the sub-scanning direction in each nozzle. That is to say, it means that the width of the roller portion 25 is less than the distance between orifices positioned on both end portions in the sub-scanning direction in each nozzle.

The distance between orifices is defined on the premise that the respective orifices provided respectively in the model-material ejection nozzle 21 and the supporting-material ejection nozzle 22 are disposed in a linear configuration in relation to X direction relative to the head portion 20, that is to say, the main scanning direction of the head portion 20. In other words, it is premised on a configuration in which the model-material ejection nozzle 21 and the supporting-material ejection nozzle 22 are positioned and disposed relative to the head portion 20 so that the positions in the main scanning direction in which ejection is performed by each single orifice of the model-material ejection nozzle 21 all overlap with the positions in the main scanning direction in which ejection is performed by each single orifice of the supporting-material ejection nozzle 22.

There is also a configuration in which a plurality of model-material ejection nozzles 21 and a plurality of the supporting-material ejection nozzle 22 are used, and the other of the model-material ejection nozzle 21 or the supporting-material ejection nozzle 22 is offset in the sub-scanning direction relative to the first of the model-material ejection nozzle 21 or the supporting-material ejection nozzle 22, and positioned relative to the head portion 20.

The basic objective of using a plurality of model-material ejection nozzles 21, and in the figure, two and a plurality of supporting-material ejection nozzles 22 is to improve the resolution in the Y direction of the model material or the supporting material by offsetting the position in the sub-scanning direction of the orifices provided on one of the model-material ejection nozzles 21 and the supporting-material ejection nozzles 22 relative to the position in the sub-scanning direction of the orifices provided on the other of the model-material ejection nozzles 21 and the supporting-material ejection nozzles 22.

That is to say, positioning is performed so that orifices provided on the other of the model-material ejection nozzle 21 and the supporting-material ejection nozzle 22 are provided in the sub-scanning direction between two adjacent orifices provided on one of the model-material ejection nozzles 21 and the supporting-material ejection nozzles 22.

In this case, the meaning of the width of the roller portion 25 in the present invention being less than the width of the model-material ejection nozzle 21 and the width of the supporting-material ejection nozzle 22 provided on the shaping-material ejection device is as follows.

The width of the model-material ejection nozzle 21 when a plurality of model-material ejection nozzles 21 is disposed in an offset configuration in relation to the sub-scanning direction means that the width of the roller portion 25 is less than the distance from the offset position disposed on the outermost side on one end portion in the sub-scanning direction of the plurality of model-material ejection nozzles 21 to the offset position disposed on the outermost side on the other end portion in the sub-scanning direction. This configuration is the same also in relation to the plurality of supporting-material ejection nozzles 22 adopted in the same system. In the same manner as the basic system described above, this system is premised on a configuration in which the model-material ejection nozzles 21 and the supporting-material ejection nozzles 22 are positioned and disposed relative to the head portion 20 so that the positions in the main scanning direction in which ejection is performed by each single orifice of the model-material ejection nozzle 21 all overlap with the positions in the main scanning direction in which ejection is performed by each single orifice of the supporting-material ejection nozzle 22.

The width of the roller portion 25 described above denotes the axial direction of the roller portion 25, that is to say, the substantial width used when scraping off excess resin on the roller surface of the roller portion 25 in the sub-scanning direction, and even when the apparent width is larger than the width of the model-material ejection nozzle 21 and the width of the supporting-material ejection nozzle 22, the width of the roller that is the original function as the roller portion and performs the scraping function may be less than the width of the model-material ejection nozzle 21 and the width of the supporting-material ejection nozzle 22.

Furthermore, the roller diameter may be varied by provision of a step from the roller portion formed on the end portion of the roller that substantially does not function to scrape off excess resin to the roller portion that substantially scrapes off excess resin, or the diameter of the roller portion may be continuously varied gradually from the roller portion formed on the end portion of the roller that substantially does not function to scrape off excess resin toward the roller portion that substantially scrapes off excess resin.

Fig. 8 shows an example of the bottom view of the head portion 20. In the example illustrated in the figure, the model-material ejection nozzle 21 and the supporting-material ejection nozzle 22 are disposed to respectively offset two rows of ejection nozzles. A width D1 of the model-material ejection nozzle 21 and a width D2 of the supporting-material ejection nozzle 22 are substantially equal or the offset amount is also substantially equal. Therefore, the ejection width DN of all ejection nozzles is substantially equal in both the model-material ejection nozzles 21 and the supporting-material ejection nozzles 22. The width DR of the roller portion 25 is less than the ejection width DN of the ejection nozzle. By reducing the width of the roller portion 25 to be less than the ejection width DN, as illustrated in Fig. 9 even when the same layer (slice) is shaped into a plurality of sections (the sections R1, R2 in the example illustrated in Fig. 9), when the roller portion 25 presses the right-side section R2, no contact is made with the already shaped section (the left-side section R1 in Fig. 7), and therefore a large surface area shaping operation is possible with high accuracy. Since there is no erroneous recovery of resin after curing, a state in which the suction pipe is blocked can be avoided. Furthermore, shaking of the roller portion and the amount of adjustment of the tilt is preferably less than or equal to the thickness of one slice, and therefore difficulties associated with adjustments during the preparation and mounting of the roller portion can be reduced. In this context, the width of the roller portion 25 is formed to be less than the distance between the orifices on both ends of the model-material ejection nozzle and the supporting-material ejection nozzle by one half of the orifice alignment pitch (0.5 mm). For example, when the orifice alignment pitch is 1 mm, the width of the roller portion 25 is formed to be respectively 0.5mm less on both ends than the distance between the orifices that are positioned on both ends of the model-material ejection nozzle and the supporting-material ejection nozzle.

A configuration in which the width of the roller portion 25 is less than the ejection width means that there is a portion in which resin cannot be recovered by the roller portion 25 such as the portion enclosed by the broken line as illustrated in Fig. 9. However, immediately after the excess portion of resin is recovered by the roller portion 25, the resin is not maintained from the liquid state to the state illustrated in Fig. 10(a), and as a result of not maintaining the shape due to its weight, sags as illustrated in Fig. 10(b). As a result, shaping is performed that is substantially the same as when all is recovered by the roller portion 25, and there is almost no problem in practice. In the actual example, the thickness of the excess resin that is scraped from the uppermost surface of the shaped body is a thickness of for example several tens of µm, and preferably no more than 50 µm. Therefore it can be stated that there is no problem in practice even when the height of the resin in the scraping residual portion is of a similar height.

When ejecting resin with the shaping-material ejection device based on slice data that includes an arbitrary thickness, printing can be performed by offsetting in the sub-scanning direction from the resin ejection position in the previous sub-scanning direction. In this manner, the position at which the roller portion 25 is not applied in relation to each slice layer is varied, and the effect of residual resin that is not recovered does not accumulate and therefore is uniformly suppressed.

More specifically, after ejection of resin while displacing the first slice layer in the main scanning direction at the predetermined sub-scanning position, maintaining that sub-scanning position and scraping off excess resin with the roller portion 25, and then after the next slice layer is displaced by a fixed distance in the sub-scanning direction from the above predetermined position, ejection of resin is performed while displacing in the main scanning direction at that sub-scanning position, the sub-scanning position is maintained, and the roller portion 25 scrapes off excess resin.

As illustrated in Fig. 8, in a configuration in which the model-material ejection nozzles 21 are disposed with an offset in a plurality of rows, the width of the roller portion 25 is formed to be less than the width of the total set of the plurality of rows of the model-material ejection nozzles 21. In this manner, the resolution can be improved by disposing the model-material ejection nozzles 21 with an offset, the width of the roller portion 25 can be reduced in relation to the model-material ejection nozzles 21 disposed in an offset configuration, and even when the same slice is shaped by division into a plurality of sections, the roller portion 25 does not make contact with the shaped body, and high accuracy shaping can be executed.

### (Second Embodiment)

Furthermore, the effect of unrecovered residual resin can be prevented from accumulating by varying the position of application of the roller portion in relation to each slice. That is to say, a state in which only the interface portion is higher can be suppressed by varying the position of the border between sections in each slice. For example, in the second embodiment illustrated in Fig. 11, the ejection position for resin is offset by the control device 10 so that the border P2 of the next step is positioned between the borders P1 of the sections in which ejection was performed in the previous step. In this manner, even when shaping is slightly higher as a result of the previous slice, the next slice is subjected to recovery of the raised portion of uncured resin with the roller portion 25, the effect in relation to the height dimension does not accumulate, and therefore it is possible to avoid and suppress a problem of residual unrecovered resin.

In this manner, even when shaping the same slice by division into a plurality of sections by ejection of shaping material as in the above embodiment, a collision of the roller portion with the resin after curing can be avoided, and the quality of the shaped object can be improved.

The three-dimensional shaping apparatus according to the present invention can be suitably used in relation to three-dimensional shaping of a UV-cured resin in an ink-jet manner.

- 100: THREE-DIMENSIONAL SHAPING SYSTEM
- 1: SET-DATA CREATING APPARATUS
- 2, 2': THREE-DIMENSIONAL SHAPING APPARATUS
- 10: CONTROL DEVICE
- 20: HEAD PORTION
- 20A: EJECTION HEAD UNIT
- 20B: RECOVERY AND CURING HEAD UNIT
- 21: MODEL-MATERIAL EJECTION NOZZLE
- 22: SUPPORTING-MATERIAL EJECTION NOZZLE
- 23: NOZZLE ROW
- 24: CURING DEVICE
- 25: ROLLER PORTION
- 26: ROLLER MAIN BODY
- 27: BLADE
- 28: BATH
- 29: SUCTION PIPE
- 30: HEAD MOVING DEVICE
- 31: XY DIRECTION DRIVING PORTION
- 32, 32': Z DIRECTION DRIVING PORTION
- 40: SHAPING PLATE
- 43: X DIRECTION DISPLACING RAIL
- 44: Y DIRECTION DISPLACING RAIL
- 45: RAIL GUIDE
- MA: MODEL MATERIAL
- SA: SUPPORTING MATERIAL
- SS: SUPPORTING SHELL
- PC: COMPUTER
- SB: OVERHANG SUPPORTING PORTION
- D1: WIDTH OF MODEL-MATERIAL EJECTION NOZZLE
- D2: WIDTH OF SUPPORTING-MATERIAL EJECTION NOZZLE
- DN: EJECTION WIDTH OF ALL EJECTION NOZZLES
- Dr, DR: WIDTH OF ROLLER PORTION
- P1: BORDER OF PREVIOUS STEP
- P2: BORDER OF SUBSEQUENT STEP
- R1-R3: SECTION

## Claims

1. A three-dimensional shaping apparatus configured to repeatedly perform operations for ejecting and curing as shaping materials, onto a shaping plate (40), a model material (MA) configured to form a final shaped object and a supporting material (SA) configured to support a protruding portion of the model material (MA) and to be finally removed, while performing scanning at least in a single direction, and thereby to form slices having a predetermined thickness in a height direction into a laminated configuration, and laminating these slices in the height direction for performing shaping, the three-dimensional shaping apparatus comprising:
the shaping plate (40) configured to place a shaped object thereon;
a shaping-material ejection device including model-material ejection nozzles (21) configured to eject the model material MA and supporting-material ejection nozzles (22) configured to eject the supporting material SA;
a roller portion (25) configured to press the upper surface of the model material (MA) or the supporting material (SA) when in a flowable state and scraping off an excess portion of the model material (MA) or the supporting material (SA);
a curing device (24) configured to cure the model material (MA) and the supporting material (SA);
a head portion (20) including the shaping-material ejection device, the roller portion (25), and the curing device (24);
a horizontal driving device configured to perform reciprocating scanning of the head portion (20) in a horizontal direction;
a vertical driving device configured to move the positions of the head portion (20) and the shaping plate (40) with respect to each other in the height direction; and
a control device (10) configured to control the driving of the horizontal driving device and the vertical driving device, and control ejection of the shaping material by the shaping-material ejection device and curing by the curing device (24); wherein
each nozzle (21, 22) includes a plurality of orifices, and the width of the nozzle (D1, D2) being the distance between the orifices positioned on both ends of the nozzle is greater than the width (DR) of the roller portion (25), the width (DR) being the axial direction of the roller portion (25).

2. The three-dimensional shaping apparatus according to claim 1, wherein the horizontal driving device is configured to perform scanning of the head portion in a sub-scanning direction perpendicular to the scanning direction such that, when forming each layer based on the data for each arbitrary slice layer with the shaping-material ejection device, printing can be executed by offsetting in the sub-scanning direction a resin injection position with respect to the resin injection position of the previous slice.

3. The three-dimensional shaping apparatus according to claim 1 or claim 2, wherein the model-material ejection nozzles (21) are disposed with an offset in a plurality of rows, the width of the roller portion (25) being formed to be less than the width of the total set of the plurality of rows of the model-material ejection nozzles (21).

4. The three-dimensional shaping apparatus according to any one of claim 1 to claim 3, wherein the width of the model-material ejection nozzles (21) and the width of the supporting-material ejection nozzles (22) are equal.

5. The three-dimensional shaping apparatus according to any one of claim 1 to claim 4, wherein the apparatus is configured such that model material (MA) and the supporting material (SA) are not ejected at the same time in the same reciprocating scan on the line on which the model material (MA) and the supporting material (SA) are positioned in the scanning direction of the shaped object, and only one of the shaping materials is ejected and cured.

## Patentansprüche

1. Dreidimensionale Formungsvorrichtung, die dazu ausgestalte ist, wiederholt Operationen zum Ausstoßen und Härten eines Modellmaterials (MA), das dazu ausgestaltet ist, ein fertig geformtes Objekt auszubilden, und eines Unterstützungsmaterials (SA), das dazu ausgestaltet ist, einen vorstehenden Abschnitt des Modellmaterials (MA) zu stützen und am Ende entfernt zu werden, als Formungsmaterial auf eine Formungsplatte (40) durchzuführen, während ein Abtasten in mindestens einer einfachen Richtung durchgeführt wird und dadurch Scheiben, die eine vorbestimmte Dicke in einer Höhenrichtung haben, in einer geschichteten Konfiguration ausgebildet werden und diese Scheiben in der Höhenrichtung zum Durchführen einer Formung geschichtet werden, wobei die dreidimensionale Formungsvorrichtung umfasst:
die Formungsplatte (40), die dazu ausgestaltet ist, darauf ein geformtes Objekt zu platzieren;
eine Formungsmaterialausstoßeinrichtung, die Modellmaterialausstoßdüsen (21), die dazu ausgestaltet sind, das Modellmaterial (MA) auszustoßen, und Unterstützungsmaterialausstoßdüsen (22), die dazu ausgestaltet sind, das Unterstützungsmaterial (SA) auszustoßen, beinhaltet;
einen Rollenabschnitt (25), der dazu ausgestaltet ist, die obere Oberfläche des Modellmaterials (MA) oder des Unterstützungsmaterials (SA) zu drücken, wenn diese in einem fließbaren Zustand sind, und einen Überschussabschnitt des Modellmaterials (MA) oder des Unterstützungsmaterials (SA) abzukratzen;
eine Aushärtungseinrichtung (24), die dazu ausgestaltet ist, das Modellmaterial (MA) und das Unterstützungsmaterial (SA) auszuhärten;
einen Kopfabschnitt (20), der die Formungsmaterialausstoßeinrichtung, den Rollenabschnitt (25) und die Aushärtungseinrichtung (24) beinhaltet;
eine horizontale Antriebseinrichtung, die dazu ausgestaltet ist, wiederholtes Abtasten des Kopfabschnitts (20) in einer horizontalen Richtung durchzuführen;
eine vertikale Antriebseinrichtung, die dazu ausgestaltet ist, die Positionen des Kopfabschnitts (20) und der Formungsplatte (40) relativ zueinander in der Höhenrichtung zu verschieben; und
eine Steuerungseinrichtung (10), die dazu ausgestaltet ist, den Antrieb der horizontalen Antriebseinrichtung und der vertikalen Antriebseinrichtung zu steuern und das Ausstoßen des Formungsmaterials durch die Formungsmaterialausstoßeinrichtung und das Aushärten durch die Aushärtungseinrichtung (24) zu steuern; wobei
jede Düse (21, 22) mehrere Öffnungen beinhaltet und die Breite der Düse (D1, D2), die der Abstand zwischen den Öffnungen ist, die an beiden Enden der Düse positioniert sind, größer als die Breite (DR) des Rollenabschnitts (25) ist, wobei die Breite (DR) die axiale Richtung des Rollenabschnitts (25) ist.

2. Dreidimensionale Formungsvorrichtung nach Anspruch 1, wobei die horizontale Antriebseinrichtung dazu ausgestaltet ist, ein Abtasten des Kopfabschnitts in einer Unterabtastrichtung durchzuführen, die senkrecht zu der Abtastrichtung ist, sodass, wenn jede Schicht auf Basis der Daten für jede willkürliche Scheibenschicht mit der Formungsmaterialausstoßeinrichtung ausgebildet wird, Drucken durch Versetzen einer Kunststoffeinspritzposition in der Unterabtastrichtung bezüglich der Kunststoffeinspritzposition der vorherigen Scheibe durchgeführt werden kann.

3. Dreidimensionale Formungsvorrichtung nach Anspruch 1 oder 2, wobei die Modellmaterialausstoßdüsen (21) mit einem Versatz in mehreren Reihen angeordnet sind, wobei die Breite des Rollenabschnitts (25) kleiner als die Breite des gesamten Satzes der mehreren Reihen der Modellmaterialausstoßdüsen (21) ausgebildet ist.

4. Dreidimensionale Formungsvorrichtung nach einem der Ansprüche 1 bis 3, wobei die Breite der Modellmaterialausstoßdüsen (21) und die Breite der Unterstützungsmaterialausstoßdüsen (22) gleich ist.

5. Dreidimensionale Formungsvorrichtung nach einem der Ansprüche 1 bis 4, wobei die Vorrichtung so ausgestaltet ist, dass das Modellmaterial (MA) und das Unterstützungsmaterial (SA) nicht zur selben Zeit in derselben Wiederholungsabtastung auf der Linie, auf der das Modellmaterial und das Unterstützungsmaterial (SA) in die Abtastrichtung des geformten Objekts positioniert werden, ausgestoßen werden und nur eins der Formungsmaterialien ausgestoßen und ausgehärtet wird.

## Revendications

1. Appareil de façonnage tridimensionnel configuré pour réaliser de manière répétée des opérations d'éjection et de durcissement, en tant que matériaux de façonnage, sur une plaque de façonnage (40), d'un matériau de modèle (MA) configuré pour former un objet final façonné et d'un matériau de support (SA) configuré pour supporter une partie en saillie du matériau de modèle (MA) et pour être finalement retiré, tout en réalisant un balayage au moins dans une seule direction, et pour former ainsi des tranches ayant une épaisseur prédéterminée dans une direction de la hauteur dans une configuration stratifiée, et en stratifiant ces tranches dans la direction de la hauteur pour réaliser un façonnage, l'appareil de façonnage tridimensionnel comprenant :
la plaque de façonnage (40) configurée pour placer un objet façonné sur celle-ci ;
un dispositif d'éjection de matériau de façonnage comportant des buses d'éjection de matériau de modèle (21) configurées pour éjecter le matériau de modèle MA et des buses d'éjection de matériau de support (22) configurées pour éjecter le matériau de support SA ;
une partie de rouleau (25) configurée pour presser la surface supérieure du matériau de modèle (MA) ou du matériau de support (SA) lorsqu'il est dans un état fluide et pour enlever une partie en excès du matériau de modèle (MA) ou du matériau de support (SA) ;
un dispositif de durcissement (24) configuré pour durcir le matériau de modèle (MA) et le matériau de support (SA) ;
une partie de tête (20) comportant le dispositif d'éjection de matériau de façonnage, la partie de rouleau (25), et le dispositif de durcissement (24) ;
un dispositif d'entraînement horizontal configuré pour réaliser un balayage alternatif de la partie de tête (20) dans une direction horizontale ;
un dispositif d'entraînement vertical configuré pour déplacer les positions de la partie de tête (20) et de la plaque de façonnage (40) l'une par rapport à l'autre dans la direction de la hauteur ; et
un dispositif de commande (10) configuré pour commander l'entraînement du dispositif d'entraînement horizontal et du dispositif d'entraînement vertical, et pour commander l'éjection du matériau de façonnage par le dispositif d'éjection de matériau de façonnage et le durcissement par le dispositif de durcissement (24) ; où
chaque buse (21, 22) comporte une pluralité d'orifices, et la largeur de la buse (Dl, D2) qui est la distance entre les orifices positionnés sur les deux extrémités de la buse est supérieure à la largeur (DR) de la partie de rouleau (25), la largeur (DR) étant la direction axiale de la partie de rouleau (25).

2. Appareil de façonnage tridimensionnel selon la revendication 1, dans lequel le dispositif d'entraînement horizontal est configuré pour réaliser un balayage de la partie de tête dans une direction de balayage secondaire perpendiculaire à la direction de balayage de sorte que, lors de la formation de chaque couche sur la base des données pour chaque couche de tranche arbitraire avec le dispositif d'éjection de matériau de façonnage, une impression puisse être exécutée en décalant dans la direction de balayage secondaire une position d'injection de résine par rapport à la position d'injection de résine de la tranche précédente.

3. Appareil de façonnage tridimensionnel selon la revendication 1 ou 2, dans lequel les buses d'éjection de matériau de modèle (21) sont disposées avec un décalage dans une pluralité de rangées, la largeur de la partie de rouleau (25) étant formée comme étant inférieure à la largeur de l'ensemble total de la pluralité de rangées des buses d'éjection de matériau de modèle (21).

4. Appareil de façonnage tridimensionnel selon l'une quelconque des revendications 1 à 3, dans lequel la largeur des buses d'éjection de matériau de modèle (21) et la largeur des buses d'éjection de matériau de support (22) sont égales.

5. Appareil de façonnage tridimensionnel selon l'une quelconque des revendications 1 à 4, dans lequel l'appareil est configuré de sorte que le matériau de modèle (MA) et le matériau de support (SA) ne soient pas éjectés simultanément lors du même balayage alternatif sur la ligne sur laquelle le matériau de modèle (MA) et le matériau de support (SA) sont positionnés dans la direction de balayage de l'objet façonné, et seulement l'un des matériaux de façonnage soit éjecté et durci.
